# EUROPÄISCHE PATENTANMELDUNG

(11) **EP 2 278 196 A1**
(43) Veröffentlichungstag der Anmeldung: **26.01.2011**
(21) Anmeldenummer: 09009479.8
(22) Anmeldetag: 22.07.2009
(51) Int. Cl.: F16J 15/32

(54) **Dichtring und Dichtungsanordnung damit**

(71) Anmelder: Carl Freudenberg KG, 69469 Weinheim (DE)
(72) Erfinder: Hintenlang, Günter, 69518 Abtsteinach (DE); Heldmann, Martin, 64678 Lindenfels (DE)

(57) **Zusammenfassung**

Dichtring zur Trennung zweier strömungsfähiger Medien (1, 2) voneinander, umfassend zwei mit axialem Abstand (3) zueinander benachbart angeordnete Dichtlippen (4, 5) aus elastomerem Werkstoff, die beide herstellungsbedingt in radialer Richtung eben und kreisringförmig ausgebildet und während ihrer bestimmungsgemäßen Verwendung in die selbe axiale Richtung (6) vorgewölbt sind und auf ihrer einer abzudichtenden Oberfläche (7) zugewandten Seite (8, 9) jeweils eine Rückfördereinrichtung (10, 11) aufweisen, wobei die Rückfördereinrichtung (10) der ersten Dichtlippe (4) einen Rechtsdrall (12) und die Rückfördereinrichtung (11) der zweiten Dichtlippe (5) einen Linksdrall (13) aufweist oder wobei die Rückfördereinrichtungen (11, 12) der ersten Dichtlippe (4) und der zweiten Dichtlippe (5) jeweils einen Wechseldrall aufweisen.

## Beschreibung

### Technisches Gebiet

Die Erfindung betrifft einen Dichtring zur Trennung zweier strömungsfähiger Medien voneinander, umfassend zwei mit axialem Abstand zueinander benachbart angeordnete Dichtlippen.

### Stand der Technik

Solche Dichtringe sind allgemein bekannt und trennen beispielsweise unterschiedliche flüssige Medien voneinander. Ebenfalls bekannt ist, dass die Dichtlippen jeweils eine Rückfördereinrichtung aufweisen, zur Rückförderung des abzudichtenden Mediums in den jeweils abzudichtenden Raum. Die Förderrichtung der beiden Dichtlippen ist dabei entgegengesetzt.

Dichtungsanordnungen, die einen zuvor beschriebenen Dichtring umfassen, sind ebenfalls bekannt, wobei der Dichtring flüssigkeitsdicht in ein Gehäuse eingepresst ist und mit seinen Dichtlippen die Oberfläche einer abzudichtenden Welle unter elastischer Vorspannung dichtend umschließt.

Der Erfindung liegt die Aufgabe zugrunde, einen Dichtring und eine Dichtungsanordnung damit derart weiterzuentwickeln, dass diese einfach und kostengünstig herstellbar sind, dass zwischen den Dichtlippen und der abzudichtenden Oberfläche während der bestimmungsgemäßen Verwendung jeweils nur eine geringe Reibung entsteht und dass die Montage des abzudichtenden Maschinenelements in den Dichtring problemlos erfolgen kann, ohne die Dichtlippen zu beschädigen.

Diese Aufgabe wird erfindungsgemäß durch die Merkmale der Ansprüche 1, 2 und 6 gelöst. Auf vorteilhafte Ausgestaltungen des Dichtrings nehmen die auf Ansprüche 1 und 2 rückbezogenen Ansprüche Bezug.

### Darstellung der Erfindung

Zur Lösung der Aufgabe ist ein Dichtring zur Trennung zweier strömungsfähiger Medien voneinander vorgesehen, umfassend zwei mit axialem Abstand zueinander benachbart angeordnete Dichtlippen aus elastomerem Werkstoff, die beide herstellungsbedingt in radialer Richtung eben und kreisringförmig ausgebildet und während ihrer bestimmungsgemäßen Verwendung in die selbe axiale Richtung vorgewölbt sind und auf ihrer einer abzudichtenden Oberfläche zugewandten Seite jeweils eine Rückfördereinrichtung aufweisen, wobei die Rückfördereinrichtung der ersten Dichtlippe einen Rechtsdrall und die Rückfördereinrichtung der zweiten Dichtlippe einen Linksdrall aufweist.
Nach einer anderen Ausgestaltung ist zur Lösung der Aufgabe ein Dichtring zur Trennung zweier strömungsfähiger Medien voneinander vorgesehen, umfassend zwei mit axialem Abstand zueinander benachbart angeordnete Dichtlippen aus elastomerem Werkstoff, die beide herstellungsbedingt in radialer Richtung eben und kreisringförmig ausgebildet und während ihrer bestimmungsgemäßen Verwendung in die selbe axiale Richtung vorgewölbt sind und auf ihrer einer abzudichtenden Oberfläche zugewandten Seite jeweils eine Rückfördereinrichtung aufweisen, wobei die die Rückfördereinrichtungen der ersten Dichtlippe (4) und der zweiten Dichtlippe (5) jeweils einen Wechseldrall aufweisen.

Geeignete Elastomerwerkstoffe für die Dichtlippen sind in großer Anzahl für unterschiedliche Anwendungsfälle bekannt. Bei dem erfindungsgemäßen Dichtring ist von hervorzuhebendem Vorteil, dass die Montage des abzudichtenden Maschinenelements in den Dichtring besonders einfach und prozesssicher erfolgen kann und dass die Gefahr einer Beschädigung der Dichtlippen während der Montage auf ein Minimum begrenzt ist. Die Montage des abzudichtenden Maschinenelements, zum Beispiel eine Welle, erfolgt derart, dass diese axial in Montagerichtung in den Dichtring eingeführt wird und dabei die beiden herstellungsbedingt in radialer Richtung eben und kreisringförmig ausgebildeten Dichtlippen axial in Montagerichtung vorwölbt werden. Befindet sich das abzudichtende Maschinenelement in seiner endgültigen Position, sind beide Dichtlippen in dieselbe Richtung vorgewölbt. Um dennoch unterschiedliche Förderrichtungen des abzudichtenden Mediums jeweils in den abzudichtenden Raum zu erreichen, weist die Rückfördereinrichtung der ersten Dichtlippe einen Rechtsdrall und die Rückfördereinrichtung der zweiten Dichtlippe einen Linksdrall auf, wobei die Rückfördereinrichtungen jeweils auf der der abzudichtenden Oberfläche zugewandten Seite der Dichtlippen angeordnet sind. Trotz Vorwölbung der Dichtlippen in dieselbe Richtung, ist die Rückförderrichtung entgegengesetzt zueinander. Die Gefahr von montagebedingten Umstülpungen und/oder Beschädigungen der Dichtlippen ist dadurch auf ein Minimum reduziert, dass beide Dichtlippen in Montagerichtung des abzudichtenden Maschinenelements vorgewölbt sind.
Beide Dichtlippen können auch einen Wechseldrall aufweisen.

Jede Dichtlippe kann an einem Teil-Dichtring festgelegt sein. Die Teil-Dichtringe können, mit Ausnahme der jeweiligen Dichtlippen, übereinstimmend ausgebildet und Rücken an Rücken angeordnet sein. Die Teil-Dichtringe können kraft- und / oder formschlüssig miteinander verbunden sein und eine vormontierbare Einheit bilden. Bevorzugt ist die Verbindung der Teil-Dichtringe formschlüssig. Dazu besteht die Möglichkeit, dass an einem der Teil-Dichtringe zumindest ein Rast-Vorsprung angeordnet ist, der in eine Hinterschneidung des anderen Teil-Dichtrings einschnappbar ist. Der Rast-Vorsprung kann durch einen umfangsseitig umlaufenden, in sich geschlossenen Wulst ausgebildet sein, der in eine umfangsseitig umlaufende, nutförmige Hinterschneidung einschnappbar ist.

Die Dichtlippen können frei von sekundären Anpresselementen ausgebildet sein. Als sekundäre Anpresselemente werden im Rahmen der vorliegenden Erfindung beispielsweise Ringwendelfedem verstanden, die die Dichtlippen außenumfangsseitig umschließen und radial nach innen auf die abzudichtende Oberfläche pressen.
Der Vorteil von Dichtlippen, die frei von sekundären Anpresselementen ausgebildet sind, ist darin zu sehen, dass die Reibung zwischen den Dichtlippen und der abzudichtenden Oberfläche reduziert ist, dadurch eine unerwünschte Temperaturerhöhung im Bereich der Berührung von Dichtlippen und abzudichtender Oberfläche vermieden wird und resultierend ebenfalls die Entstehung von Ölkohle. Die Dichtlippen, die frei von sekundären Anpresselementen ausgebildet sind, weisen gleichbleibend gute Gebrauchseigenschaften während einer langen Gebrauchsdauer auf.

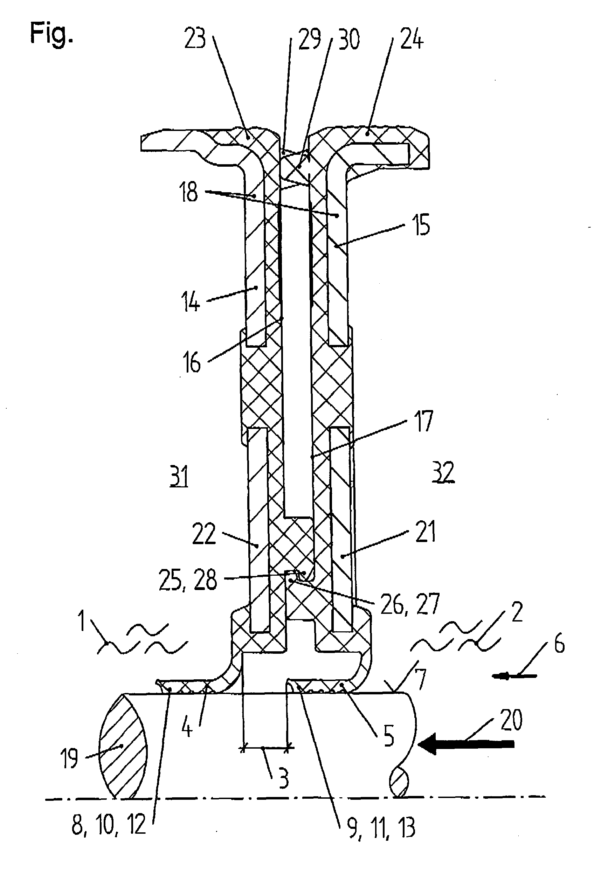

### Kurzbeschreibung der Zeichnung

Ein Ausführungsbeispiel der erfindungsgemäßen Dichtung wird nachfolgend anhand der Figur näher erläutert. Diese zeigt in schematischer Darstellung eine erfindungsgemäße Dichtungsanordnung, in der ein erfindungsgemäßer Dichtring zur Anwendung gelangt.

### Ausführung der Erfindung

In der Figur ist eine Dichtungsanordnung mit einem Dichtring gezeigt, der durch zwei Teil-Dichtringe 14, 15 gebildet ist. Mit Ausnahme der jeweiligen Dichtlippen 4, 5 sind die Teil-Dichtringe 14, 15 übereinstimmend ausgebildet und Rücken 16 an Rücken 17 angeordnet.

Die Teil-Dichtringe 14, 15 umfassen jeweils einen Stützkörper 21, 22 aus einem zähharten Werkstoff; in diesem Fall bestehen die Stützkörper 21, 22 aus einem metallischen Werkstoff. Die Stützkörper 21, 22 sind teilweise von elastomerem Werkstoff ummantelt, wobei die Stützkörper 21, 22 radial außenumfangsseitig jeweils von einer statischen Dichtung 23, 24 aus elastomerem Werkstoff umschlossen sind, die die Begrenzungswand einer hier nicht dargestellten Gehäusebohrung dichtend berühren.
Auf ihren axial zugewandten Seiten weisen die Teil-Dichtringe 14, 15 Rast-Vorsprünge 25, 26 auf, die in entsprechend ausgebildete Hinterschneidungen 27, 28 einschnappbar sind. Durch die formschlüssige Verbindung der Teil-Dichtringe 14, 15 wird die vormontierbare Einheit 18 gebildet. Radial außenumfangsseitig sind die Rast-Vorsprünge 25, 26 und die Hinterschneidungen 27, 28 von Führungsnoppen 29, 30 umschlossen, die jeweils axial in Richtung des benachbarten Teil-Dichtrings 14, 15 vorstehen und sich an dessen Oberfläche abstützen. Die Positionierung der Teil-Dichtringe 14, 15 ist dadurch stets exakt.

Die beiden strömungsfähigen Medien 1, 2 können beispielsweise durch unterschiedliche Öle gebildet sein, die durch die Dichtlippen 4, 5 jeweils im entsprechenden abzudichtenden Raum 31, 32 zurückgehalten werden. Die beiden Dichtlippen 4, 5 sind mit axialem Abstand 3 benachbart zueinander angeordnet und bestehen aus einem elastomeren Werkstoff. Herstellungsbedingt sind die beiden Dichtlippen 4, 5 in radialer Richtung eben und kreisringförmig ausgebildet. Während der bestimmungsgemäßen Verwendung sind die Dichtlippen 4, 5, wie hier zeichnerisch dargestellt, in dieselbe axiale Richtung 6 vorgewölbt. Auf ihrer der abzudichtenden Oberfläche 7 zugewandten Seite 8, 9 weisen die beiden Dichtlippe 4, 5 jeweils eine Rückfördereinrichtung 10, 11 auf, wobei die Rückfördereinrichtung 10 der ersten Dichtlippe 4 einen Rechtsdrall 12 und die Rückfördereinrichtung 11 der zweiten Dichtlippe 5 einen Linksdrall 13 aufweist. Die Rückfördereinrichtungen10, 11 können auch jeweils als Wechseldrall ausgebildet sein.
Obwohl die Rückförderwirkungen des abzudichtenden Mediums 1, 2 entgegengesetzt zueinander sind, sind die Dichtlippen 4, 5 axial in dieselbe Richtung 6, die mit der Montagerichtung 20 des abzudichtenden Maschinenelements 19 übereinstimmen, vorgewölbt. Das hat den Vorteil, dass das abzudichtende Maschinenelement 19 in Montagerichtung 20 in den Dichtring eingeschoben werden kann und sich die beiden Dichtlippen 4, 5 dadurch automatisch in diese Richtung vorwölben; es ist nicht erforderlich, dass das Maschinenelement 19 durch eine entgegen der Montagerichtung 20 vorgewölbte Dichtlippe hindurch geführt werden muss, was leicht zu Beschädigungen führen kann.

Die Dichtlippen 4, 5, die Rast-Vorsprünge 25, 26, Hinterschneidungen 27, 28, die Führungsnoppen 29, 30 sowie die statischen Dichtungen 23, 24 sind materialeinheitlich und einstückig ausgebildet und bestehen aus elastomerem Werkstoff.

## Patentansprüche

1. Dichtring zur Trennung zweier strömungsfähiger Medien (1, 2) voneinander, umfassend zwei mit axialem Abstand (3) zueinander benachbart angeordnete Dichtlippen (4, 5) aus elastomerem Werkstoff, die beide herstellungsbedingt in radialer Richtung eben und kreisringförmig ausgebildet und während ihrer bestimmungsgemäßen Verwendung in die selbe axiale Richtung (6) vorgewölbt sind und auf ihrer einer abzudichtenden Oberfläche (7) zugewandten Seite (8, 9) jeweils eine Rückfördereinrichtung (10, 11) aufweisen, wobei die Rückfördereinrichtung (10) der ersten Dichtlippe (4) einen Rechtsdrall (12) und die Rückfördereinrichtung (11) der zweiten Dichtlippe (5) einen Linksdrall (13) aufweist.

2. Dichtring zur Trennung zweier strömungsfähiger Medien (1, 2) voneinander, umfassend zwei mit axialem Abstand (3) zueinander benachbart angeordnete Dichtlippen (4, 5) aus elastomerem Werkstoff, die beide herstellungsbedingt in radialer Richtung eben und kreisringförmig ausgebildet und während ihrer bestimmungsgemäßen Verwendung in die selbe axiale Richtung (6) vorgewölbt sind und auf ihrer einer abzudichtenden Oberfläche (7) zugewandten Seite (8, 9) jeweils eine Rückfördereinrichtung (10,11) aufweisen, wobei die Rückfördereinrichtungen (10, 11) der ersten Dichtlippe (4) und der zweiten Dichtlippe (5) jeweils einen Wechseldrall aufweisen.

3. Dichtring nach einen der Ansprüche 1 oder 2, **dadurch gekennzeichnet, dass** jede der Dichtlippen (4, 5) an einem Teil-Dichtring (14, 15) festgelegt ist.

4. Dichtring nach Anspruch 3, **dadurch gekennzeichnet, dass** die Teil-Dichtringe (14, 15), mit Ausnahme der jeweiligen Dichtlippen (4, 5), übereinstimmend ausgebildet und Rücken (16) an Rücken (17) angeordnet sind.

5. Dichtring nach einem der Ansprüche 3 oder 4, **dadurch gekennzeichnet, dass** die Teil-Dichtringe (14, 15) kraft-und/oder formschlüssig miteinander verbunden sind und eine vormontierbare Einheit (18) bilden.

6. Dichtring nach einem der Ansprüche 1 bis 5, **dadurch gekennzeichnet, dass** die Dichtlippen (4, 5) frei von sekundären Anpresselementen ausgebildet sind.

7. Dichtungsanordnung, umfassend einen Dichtring nach einem der Ansprüche 1 bis 6, wobei die Dichtlippen (4, 5) die Oberfläche (7) eines abzudichtenden Maschinenelements (19) unter elastischer Vorspannung dichtend umschließen, wobei das Maschinenelement (19) axial in Montagerichtung (20) in den Dichtring montierbar ist und wobei beide Dichtlippen (4, 5) von ihrer herstellungsbedingten, in radialer Richtung ebenen Form axial in Montagerichtung (20) vorgewölbt sind.

## Geänderte Patentansprüche

### Geänderte Patentansprüche gemäss Regel 137(2) EPÜ.

**1.** Dichtring zur Trennung zweier strömungsfähiger Medien (1, 2) voneinander, die in jeweils einem abzudichtenden Raum (31, 32) angeordnet und gegeneinander abgedichtet sind, umfassend zwei mit axialem Abstand (3) zueinander benachbart angeordnete Dichtlippen (4, 5) aus elastomerem Werkstoff, die beide herstellungsbedingt in radialer Richtung eben und kreisringförmig ausgebildet und während ihrer bestimmungsgemäßen Verwendung in dieselbe axiale Richtung (6) vorgewölbt sind, **dadurch gekennzeichnet, dass** die beiden Dichtlippen (4, 5) auf ihrer einer abzudichtenden Oberfläche (7) zugewandten Seite (8, 9) jeweils eine Rückfördereinrichtung (10, 11) aufweisen, zur Erzielung entgegengesetzter Rückförderrichtungen in den jeweils angrenzenden abzudichtenden Raum (31, 32), trotz Vorwölbung der Dichtlippen (4, 5) in dieselbe axiale Richtung (6) bei gleicher Drehrichtung eines abzudichtenden Maschinenelements (19).

**2.** Dichtring nach Anspruch 1, **dadurch gekennzeichnet, dass** die Rückfördereinrichtung (10) der ersten Dichtlippe (4) einen Rechtsdrall (12) und die Rückfördereinrichtung (11) der zweiten Dichtlippe (5) einen Linksdrall (13) aufweist.

**3.** Dichtring nach Anspruch 1, **dadurch gekennzeichnet, dass** die Rückfördereinrichtungen (10, 11) der ersten Dichtlippe (4) und der zweiten Dichtlippe (5) jeweils einen Wechseldrall aufweisen.

**4.** Dichtring nach einem der Ansprüche 1 bis 3, **dadurch gekennzeichnet, dass** jede der Dichtlippen (4, 5) an einem Teil-Dichtring (14, 15) festgelegt ist.

**5.** Dichtring nach Anspruch 4, **dadurch gekennzeichnet, dass** die Teil-Dichtringe (14, 15), mit Ausnahme der jeweiligen Dichtlippen (4, 5), übereinstimmend ausgebildet und Rücken (16) an Rücken (17) angeordnet sind.

**6.** Dichtring nach einem der Ansprüche 4 oder 5, **dadurch gekennzeichnet, dass** die Teil-Dichtringe (14, 15) kraft-und/oder formschlüssig miteinander verbunden sind und eine vormontierbare Einheit (18) bilden.

**7.** Dichtring nach einem der Ansprüche 1 bis 6, **dadurch gekennzeichnet, dass** die Dichtlippen (4, 5) frei von sekundären Anpresselementen ausgebildet sind.

**8.** Dichtungsanordnung, umfassend einen Dichtring nach einem der Ansprüche 1 bis 7 und ein abzudichtendes Maschinenelement (19), wobei die Dichtlippen (4, 5) die Oberfläche (7) des abzudichtenden Maschinenelements (19) unter elastischer Vorspannung dichtend umschließen, wobei das Maschinenelement (19) axial derart in den Dichtring montierbar ist, dass beide Dichtlippen (4, 5) von ihrer herstellungsbedingten, in radialer Richtung ebenen Form axial in eine Richtung (20) vorgewölbt sind.
